# EUROPEAN PATENT APPLICATION

(11) **EP 4 760 383 A1**
(43) Date of publication of application: **17.06.2026**
(21) Application number: 25222866.3
(22) Date of filing: 12.12.2025
(51) Int. Cl.: G02F 1/1347, G02F 1/1335, G02F 1/139

(54) **REFLECTIVE, TRANSMISSIVE, OPAQUE AND SCATTERING WINDOW**

(30) Priority: 13.12.2024 US 202463733471 P; 10.12.2025 US 202519414740
(71) Applicant: GENTEX CORPORATION, Zeeland, Michigan 49464 (US)
(72) Inventor: BALILI, Ryan Barrido, Zeeland, 49464 (US)
(74) Representative: Müller-Boré & Partner Patentanwälte PartG mbB

(57) **Abstract**

An optical stack (10A-10F) includes a front major surface (12) and a rear major surface (14) defining a peripheral edge (16). A reflective element (18A-18C) is located between the front and rear major surfaces (12, 14) and configured to modify the transmission of light. A scattering layer (20A, 20B) is located between the front major surface (12) and the reflective element (18A-18C). The scattering layer (20A, 20B) is switchable between a transmissive mode and a scattering mode. In the transmissive mode, light reflected from or transmitted through the reflective element (18A-18C) is substantially unchanged. In the scattering mode, light reflected from or transmitted through the reflective element (18A-18C) is substantially scattered.

## Description

### CRoss-REFERENCE TO RELATED APPLICATION

This application claims priority to and the benefit under 35 U.S.C. § 119(e) of U.S. Provisional Application No. 63/733,471, filed on December 13, 2024, entitled "A REFLECTIVE, TRANSMISSIVE, OPAQUE AND SCATTERING WINDOW," the disclosure of which is hereby incorporated herein by reference in its entirety.

### FIELD OF THE DISCLOSURE

The present disclosure generally relates to constructions and applications of an optical stack with a scattering layer configured to change the transmission of light.

### SUMMARY OF THE DISCLOSURE

According to one aspect of the present disclosure, an optical stack includes a front major surface and a rear major surface defining a peripheral edge. A reflective element is located between the front and rear major surfaces and configured to modify the transmission of light. A scattering layer is located between the front major surface and the reflective element. The scattering layer is switchable between a transmissive mode and a scattering mode. In the transmissive mode, light reflected from or transmitted through the reflective element is substantially unchanged. In the scattering mode, light reflected from or transmitted through the reflective element is substantially scattered.

According to another aspect of the present disclosure, an optical stack that is selectively bi-directionally reflective. The optical stack includes a front major surface and a rear major surface defining a peripheral edge. A switchable reflective element is located between the front and rear major surfaces and configured to selectively reflect the transmission of light from the front major surface in a first state and selectively transmit the transmission of light from the front major surface in a second state. A scattering layer is located between the front major surface and the reflective element. The scattering layer is switchable between a transmissive mode wherein light reflected from or transmitted through the reflective element is substantially unchanged, and a scattering mode wherein light reflected from or transmitted through the reflective element is substantially scattered.

According to still another aspect of the present disclosure, an optical stack includes a front major surface and a rear major surface defining a peripheral edge. A reflective element is located between the front and rear major surfaces and configured to modify the transmission of light. A segmented scattering layer is located between the front major surface and the reflective element and includes a plurality of scattering segments. Each scattering segment in the scattering layer is individually switchable between a transmissive mode wherein light reflected from or transmitted through the reflective element is substantially unchanged, and a scattering mode wherein light reflected from or transmitted through the reflective element is substantially scattered.

The present disclosure generally provides a plurality of constructions of an optical stack with a scattering layer configured to change the transmission of light. The optical stack with the scattering layer can be implemented into a variety of applications where scattering light is beneficial in conjunction with transmissive and/or reflective optical stacks.

These and other features, advantages, and objects of the present disclosure will be further understood and appreciated by those skilled in the art by reference to the following specification, claims, and appended drawings.

### BRIEF DESCRIPTION OF THE DRAWINGS

In the drawings:
FIG. 1A is a cross-sectional perspective view of an optical stack of a first construction with a scattering layer in a transmissive mode, according to an aspect of the present disclosure;
FIG. 1B is a cross-sectional perspective view of an optical stack of a first construction with a scattering layer in a scattering mode, according to an aspect of the present disclosure;
FIG. 2A is a top plan view of an automobile incorporating an optical stack, according to an aspect of the present disclosure;
FIG. 2B is an upper perspective view of an aircraft incorporating an optical stack, according to an aspect of the present disclosure;
FIG. 2C is a front elevational view of a building incorporating an optical stack, according to an aspect of the present disclosure;
FIG. 2D is an upper perspective view of an eyewear device incorporating an optical stack, according to an aspect of the present disclosure;
FIG. 3A is a cross-sectional perspective view of an optical stack of a second construction, according to an aspect of the present disclosure;
FIG. 3B depicts the transmission of light through the optical stack of the second construction in a substantially transparent state and in both inbound and outbound directions, according to an aspect of the present disclosure;
FIG. 3C depicts the transmission of light through the optical stack of the second construction in a substantially reflective state and in both inbound and outbound directions, according to an aspect of the present disclosure;
FIG. 3D depicts the transmission of light through the optical stack of the second construction in a substantially opaque state and in both inbound and outbound directions, according to an aspect of the present disclosure;
FIG. 3E depicts the transmission of light through the optical stack of the second construction in a substantially translucent state and in both inbound and outbound directions, according to an aspect of the present disclosure;
FIG. 4A is a cross-sectional perspective view of an optical stack of a third construction, according to an aspect of the present disclosure;
FIG. 4B depicts the transmission of light through the optical stack of the third construction in a substantially opaque state and in both inbound and outbound directions, according to an aspect of the present disclosure;
FIG. 4C depicts the transmission of light through the optical stack of the third construction in a substantially translucent state and in both inbound and outbound directions, according to an aspect of the present disclosure;
FIG. 5 is a cross-sectional perspective view of an optical stack of a fourth construction, according to an aspect of the present disclosure;
FIG. 6 is a cross-sectional perspective view of an optical stack of a fifth construction, according to an aspect of the present disclosure;
FIG. 7 is a cross-sectional perspective view of an optical stack of a sixth construction, according to an aspect of the present disclosure;
FIG. 8A is a cross-sectional perspective view of an optical stack of a seventh construction, according to an aspect of the present disclosure;
FIG. 8B depicts the transmission of light through the optical stack of the seventh construction in a substantially transparent state and in both inbound and outbound directions, according to an aspect of the present disclosure;
FIG. 8C depicts the transmission of light through the optical stack of the seventh construction in a substantially reflective state and in both inbound and outbound directions, according to an aspect of the present disclosure;
FIG. 8D depicts the transmission of light through the optical stack of the seventh construction in a substantially opaque state and in both inbound and outbound directions, according to an aspect of the present disclosure; and
FIG. 8E depicts the transmission of light through the optical stack of the seventh construction in a substantially translucent state and in both inbound and outbound directions, according to an aspect of the present disclosure.

### DETAILED DESCRIPTION

The present illustrated embodiments reside primarily in combinations of method steps and apparatus components related to constructions and applications of an optical stack with a scattering layer configured to change the transmission of light. Accordingly, the apparatus components and method steps have been represented, where appropriate, by conventional symbols in the drawings, showing only those specific details that are pertinent to understanding the embodiments of the present disclosure so as not to obscure the disclosure with details that will be readily apparent to those of ordinary skill in the art having the benefit of the description herein. Further, like numerals in the description and drawings represent like elements.

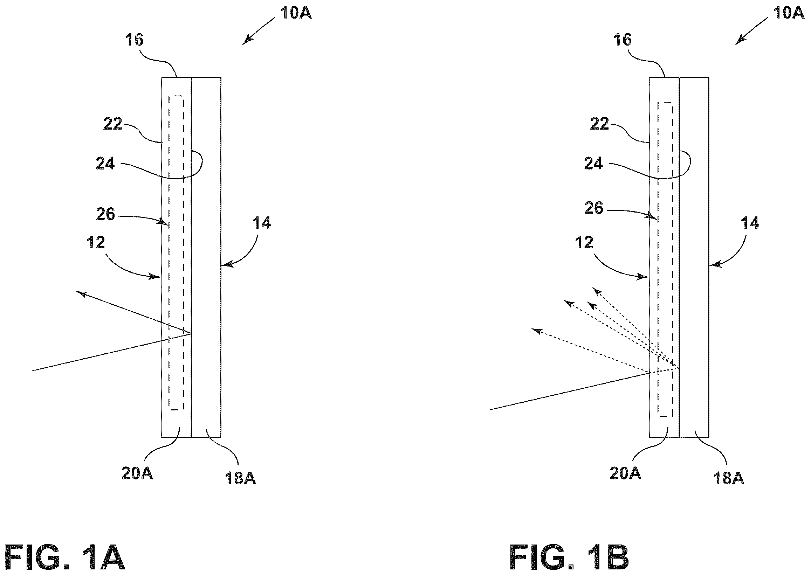

For purposes of description herein, the terms "upper," "lower," "right," "left," "rear," "front," "vertical," "horizontal," and derivatives thereof, shall relate to the disclosure as oriented in FIGS. 1A and 1B. Unless stated otherwise, the term "front" shall refer to the surface of the device closer to an intended viewer of the device, and the term "rear" shall refer to the surface of the device further from the intended viewer of the device. However, it is to be understood that the disclosure may assume various alternative orientations, except where expressly specified to the contrary. It is also to be understood that the specific devices and processes illustrated in the attached drawings, and described in the following specification, are simply exemplary embodiments of the inventive concepts defined in the appended claims. Hence, specific dimensions and other physical characteristics relating to the embodiments disclosed herein are not to be considered as limiting, unless the claims expressly state otherwise.

The terms "including," "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus. An element preceded by "comprises a . . . " does not, without more constraints, preclude the existence of additional identical elements in the process, method, article, or apparatus that comprises the element.

Referring initially to FIGS. 1A and 1B, reference numeral 10A generally designates an optical stack of a first construction. The optical stack 10A includes a front major surface 12 and a rear major surface 14 defining a peripheral edge 16. A reflective element 18A is located between the front and rear major surfaces 12, 14 and configured to modify the transmission of light. A scattering layer 20A is located between the front major surface 12 and the reflective element 18A. The scattering layer 20A is switchable between a transmissive mode and a scattering mode. In the transmissive mode, light reflected from or transmitted through the reflective element 18A is substantially unchanged. In the scattering mode, light reflected from or transmitted through the reflective element 18A is substantially scattered.

As will be appreciated with further reading, the optical stack 10A includes a variety of constructions in addition to the first construction depicted in FIGS. 1A-2D and is configured to be incorporated in a variety of structures. Generally speaking, the scattering layer 20A in conjunction with the reflective element 18A and/or other components that will be described in greater detail below. However, the combination of the scattering layer 20A in conjunction with the reflective element 18A permits the transmission of light from the rear major surface, either reflected from or transmitted through the reflective element 18A, to be selectively scattered for a more aesthetic viewer experience. More particularly, the reflective element 18A may be selectively switchable between a first state or reflective state and a second state or transmissive state. In this manner, ambient light transmitted through the optical stack 10A can be selectively scattered for reducing the intensity from the front major surface 12.

With continued reference to FIGS. 1A and 1B, the scattering layer 20A may have a variety of configurations depending on the incorporated structure and functionality. In some embodiments, the scattering layer 20A includes a front scattering surface 22 facing the front major surface 12 and a rear scattering surface 24 facing the rear major surface 14. The scattering layer 20A may further include a selectively switchable scattering medium 26. The selectively switchable scattering medium 26 may include a cholesteric liquid crystal layer sandwiched between the front scattering surface 22 and the rear scattering surface 24. In other embodiments, the selectively switchable scattering medium 26 may include a polymer-dispersed liquid crystal medium. The front scattering surface 22 and the rear scattering surface 24 may be configured as opposing substrates formed of glass or plastic and a seal (not shown) or an envelope formed of a plastic material that wraps around the switchable scattering medium 26 in a film-like manner.

The scattering layer 20A may include a dye or other coloring scheme. For example, the cholesteric liquid crystal layer may include colored crystals and/or a colored solution that the crystals are dispensed in. In some embodiments, the front scattering surface 22 and/or the rear scattering surface 24 may be colored. In this manner, the scattering layer 20A may be color-matched with an environment or incorporated structure for further aesthetic appeal. In embodiments where the crystals are colored, in the transmissive mode or the non-scattered mode, the selective color may be visibly subtle and/or non-noticeable. However, in such embodiments where the crystals are colored, the color may become more visually noticeable as the scattering layer 20A is switched to the scattering mode. It should also be appreciated that in some embodiments, the optical stack 10A and other constructions provided herein, may not include any further dimming components (e.g., electro-optic components) as the presence of the scattering layer 20A provides a dimming effect on light transmitted through or reflected from the reflective element 18A. The for purposes of the disclosure, the electro-optic components may otherwise be more specifically referred to as electrochromic. As will be described in greater detail below, polarizers may be located on opposite sides (e.g., sandwiching) the liquid crystal layer, which functions similarly to a light valve which allows a user to modulate the dimming or transparency level by changing either the voltage or frequency that is applied to the liquid crystal layer.

While the reflective element 18A and the scattering layer 20A are depicted as being in contact with one another, it should be appreciated that, in other implementations, the reflective element 18A and the scattering layer 20A may be spaced from one another. In some implementations, other layers and components may be located between the reflective element 18A and the scattering layer 20A. In some implementations, an air gap or cavity may be located between the reflective element 18A and the scattering layer 20A. The space or cavity may or may not include any other components or layers. With the first construction and every other construction, in some implementations, an illumination element may be located within the air gap or proximate a peripheral edge of one of the layers and elements in the optical stack 10A.

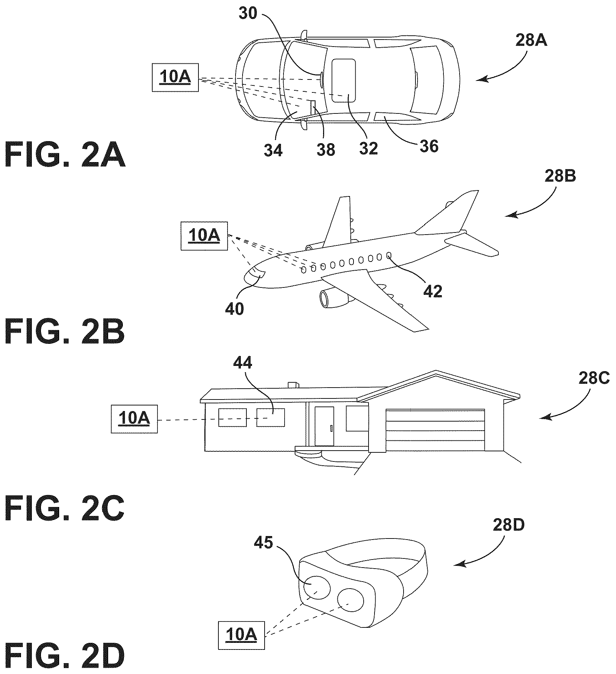

With reference now to FIGS. 2A-2D, the optical stack 10A and various constructions thereof may be incorporated into a variety of structures wherein modifying the transmission of light and scattering light through or reflected from the reflective element 18A is beneficial via the scattering layer 20A. For example, windows, mirrors, visors, and other components that modify and/or redirect the transmission of light may benefit from the incorporation of the optical stack 10A via selective scattering. More particularly, FIG. 2A illustrates an automobile 28A employing the optical stack 10A, for example, with an interior rearview mirror 30, a sunroof 32, a windshield 34, a side window 36, a visor 38, and/or other components may incorporate the optical stack 10A. The automobile 28A may include a commercial vehicle, an emergency vehicle, a residential vehicle, a water vessel, or any other transportation vessel. FIG. 2B illustrates an aircraft 28B employing the optical stack 10A, for example, a front window 40, a side window 42, an aircraft visor, and/or other components. FIG. 2C illustrates a building 28C employing optical stack 10A, for example, an internal and/or external window 44, a mirror, and/or the like. The building 28C may be a residential building, a commercial building, and/or the like. FIG. 2D illustrates eye ware 28D employing the optical stack 10A. For example, lenses 45 may be selectively reflective (e.g., from an environmental side or the rear major surface 14). Generally speaking, other structures, wherein selective scattering or dimming of light is beneficial and may also employ the optical stack 10A. As used herein, the front major surface 12 may refer to a surface facing an interior of the structure 28A-28D or towards an intended viewer (e.g., a front surface of a mirror) and the rear major surface 14 may refer to a surface facing an exterior of the structure 28A-28D or away from an intended viewer.

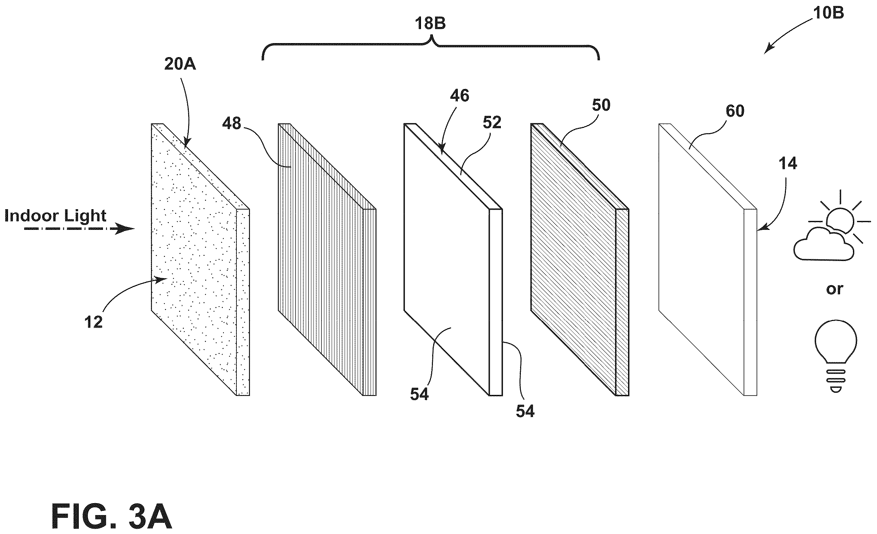

With reference now to FIG. 3A, an optical stack 10B of a second construction is depicted. Unless otherwise indicated, the optical stack 10B of the second construction may share all the same features, functions, materials, and be incorporated into the same structures as the other constructions described herein. While not limited thereto, the optical stack 10B of the second construction may be particularly beneficial via incorporation into structures where selectively reflecting light is beneficial. In this manner, the optical stack 10B may include a reflective element 18B or a selectively switchable reflective element that is configured to selectively reflect the transmission of light from the front major surface 12 in a first state or reflective state and selectively transmit the transmission of light from the front major surface 12 in a second state or transmissive state.

In some embodiments, the reflective element 18B may include a sub-stack including a liquid crystal device 46 ("LCD") switchable between the first state and the second state, a first absorptive polarizer 48 located between the LCD 46 and the scattering layer 20A, and a first reflective polarizer 50 located between the LCD 46 and the rear major surface 14. The LCD 46 may include an LCD medium 52 (e.g., contained between LCD substrates 54) containing crystals that are twisted in the first state, untwisted in the second state, or twisted in between the maximally twisted and untwisted states for modulating and adjusting the transmission of light. More particularly, the LCD medium 52 may either rotate the polarization of light only when energized (e.g., conventional) or rotate the polarization of light only when not energized (e.g., twisted nematic). In use, the first absorptive polarizer 48 is configured to pass a first polarization of light that is either transmitted through the LCD medium 52 unchanged (e.g., in the first state) or rotated to a second polarization of light (e.g., in the second state). The first reflective polarizer 50, on the other hand, is configured to reflect the first polarization of light and transmit the second polarization of light. In this manner, when the LCD medium 52 is in the first state or untwisted, the light entering through the front major surface 12 and the first absorbative polarizer 48 is in the first polarization and reflected from the first reflective polarizer 50 back towards the intended viewer. In the second state, the first polarization of light is rotated by the twisted LCD medium 52 to the second polarization of light and passes through the first reflective polarizer 50. It should be appreciated that the first reflective polarizer 50 may alternatively be configured to reflect the second polarization of light; in such embodiments, the LCD medium 52 is twisted in the first state. While the reflective element 18B is depicted as the LCD 46, it should be appreciated that other selectively switchable reflective constructions could be utilized. For example, the reflective element 18B may include an electroplated surface. Further, in other embodiments, the reflective element 18B may include other types of LCD mediums, such as a cholesteric liquid crystal layer similar to some embodiments of the scattering layer 20A. In such embodiments, the LCD 46 may include a dye or other structural coloring scheme as previously described in reference to the scattering layer. Further, the LCD 46 may include a stack of isolated layers of LCD medium 52, with at least two, three, four, or more layers including different colors (e.g., crystals with different colors) that are associated with different wavelengths. In this manner, only certain wavelengths can be selectively reflected based on user preference. "Structural color" for the purpose of the disclosure may include Bragg reflectors, interference patterns, and chiral layers, like in Cholesteric liquid crystals. Structural color is facilitated via micro- or nano-structures, causing reflection or transmission of light. Diffraction and refraction adjustments can also be utilized to create color. Like the first construction, the reflective element 18B and the scattering layer 20A may be spaced from one another by additional components, layers, and/or cavities/air gaps. The polarizers 48, 50 may be located on opposite sides (e.g., sandwiching) the LCD medium 52, which functions similarly to a light valve which allows a user to modulate the dimming or transparency level by changing either the voltage or frequency that is applied to the LCD medium 52.

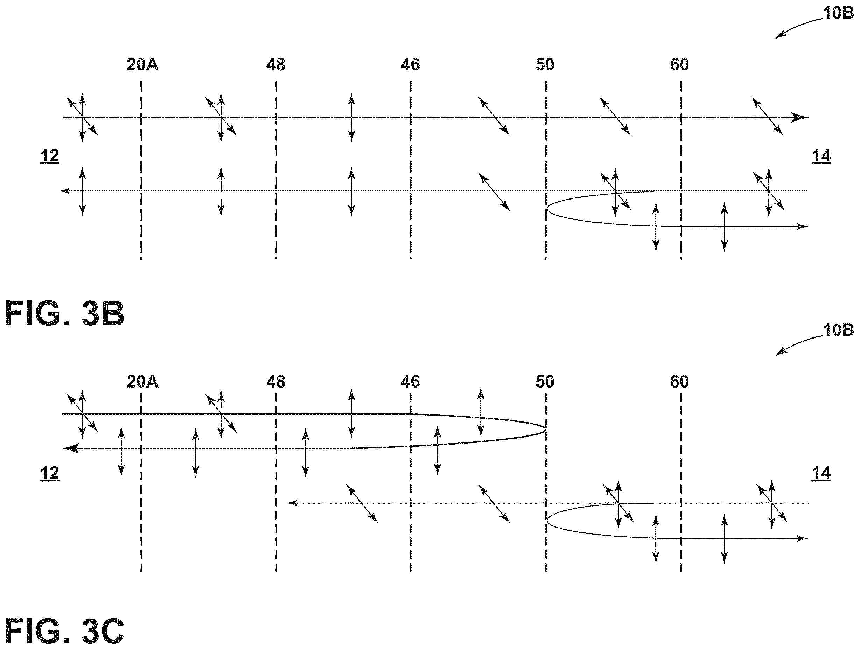

With reference now to FIGS. 3B-3E, various transmission modes are illustrated. In a first state or substantially transparent state depicted in FIG. 3B, the LCD medium 52 is in the second state or transmissive state and the scattering layer 20A is in the transmissive mode or non-scattered state. The opposing arrows indicate light transmitted into the optical stack 10B from the front major surface 12 and the rear major surface. In the substantially transparent state, the light entering from both the front major surface 12 and the rear major surface 14 remains substantially unchanged except when passing through the first absorptive polarizer 48 and the first reflective polarizer 50. More particularly, light entering the front major surface 12 filtered to the first polarization by the first absorbative polarizer 48, which passes through the first reflective polarizer 50 and light entering the rear major surface 14 partially (e.g., only the first polarization of light) passes through the first reflective polarizer 50 and the first absorptive polarizer 48. In the substantially transparent state, the degree of transparentness can be modified by a slight twisting of the crystals in the LCD medium 52. More particularly, depending on if the powered or non-powered state corresponds to twisting, a median power supplied to the LCD medium 52 that places the crystals in a partially twisted state can be utilized for selectively dimming light entering through the front major surface 12 or the rear major surface 14. In this manner, in addition to selectively reflecting and scattering, the optical stack 10B may further provide dimming functionality by selectively reducing the transmission of light.

In a second state or substantially reflective state depicted in FIG. 3C, the LCD medium 52 is in the first state or reflective state and the scattering layer 20A is in the transmissive or non-scattered state. The opposing arrows indicate light transmitted into the optical stack 10B from the front major surface 12 and the rear major surface. In the substantially transparent state, the first polarization of light from the first absorbative polarizer 48 (i.e., entering from the front major surface 12) passes through the LCD medium 52 and is reflected from the first reflective polarizer 50. Light entering the rear major surface 14, on the other hand, is partially reflected (e.g., the first polarization of light) from the first reflective polarizer 50 back outwardly. The second polarization of light passes through the reflective polarizer, is transmitted through the LCD medium 52 and is absorbed by the absorption polarizer 48. In this manner, from a perspective on the rear major surface 14, the optical stack 10B appears partially reflective.

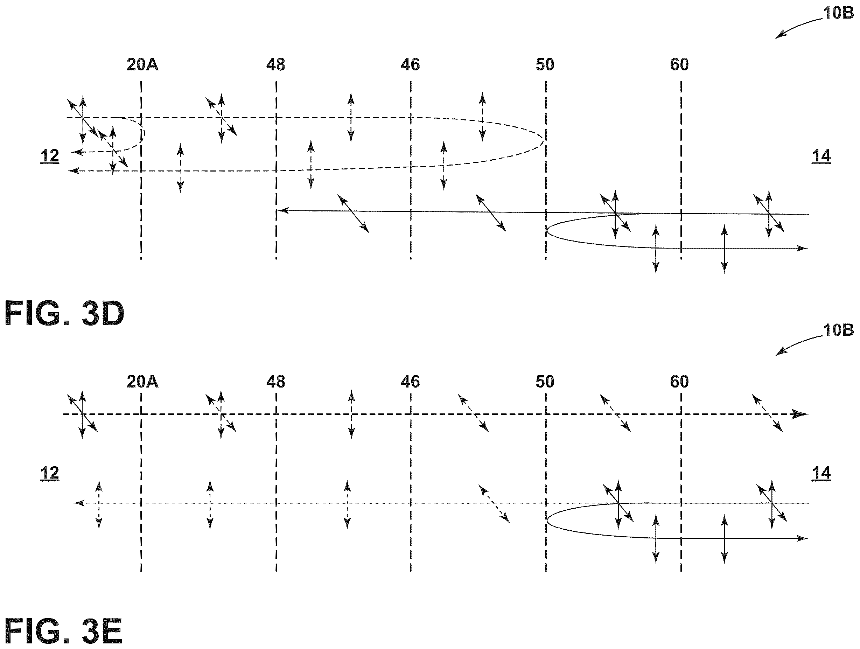

In a third state or substantially opaque state depicted in FIG. 3D, the LCD medium 52 is in the first state or reflective state and the scattering layer 20A is in the scattered state. The opposing arrows indicate light transmitted into the optical stack 10B from the front major surface 12 and the rear major surface. In the substantially opaque state, a portion of the light is initially scattered and reflected back toward the intended viewer by the scattering layer 20A. Then, the first polarization of light is filtered through the first absorbative polarizer 48 (i.e., entering from the front major surface 12) passes through the LCD medium 52 and is reflected from the first reflective polarizer 50. Both the light entering the front major surface 12 and light reflected and exiting the front major surface 12 is scattered for a reduction in transparency and an increase in opaqueness (e.g., a decrease in transparency or transmission by 50% or more). Light entering the rear major surface 14, on the other hand, is partially reflected (e.g., the first polarization of light) from the first reflective polarizer 50 back outwardly. The second polarization of light passes through the reflective polarizer, is transmitted through the LCD medium 52 and is absorbed by the absorption polarizer 48. In this manner, from a perspective on the rear major surface 14, the optical element 10B appears partially opaque and scattered.

In a fourth state or substantially translucent state depicted in FIG. 3E, the LCD medium 52 is in the second state or transmissive state and the scattering layer 20A is in the scattered state. The opposing arrows indicate light transmitted into the optical stack 10B from the front major surface 12 and the rear major surface. In the substantially translucent state, the first polarization of light from the first absorbative polarizer 48 (i.e., entering from the front major surface 12) is rotated by the LCD medium 52 and passes through the first reflective polarizer 50. Light entering the rear major surface 14, on the other hand, is partially reflected (e.g., the first polarization of light) from the first reflective polarizer 50 back outwardly. The second polarization of light passes through the reflective polarizer, is rotated by the LCD medium 52 and transmitted through the absorption polarizer 48. In this manner, from a perspective of the front major surface 12, the optical element 10B appears translucent via the scattering of light from the scattering layer. From a perspective of the rear major surface 14, the optical element 10B appears partially reflective.

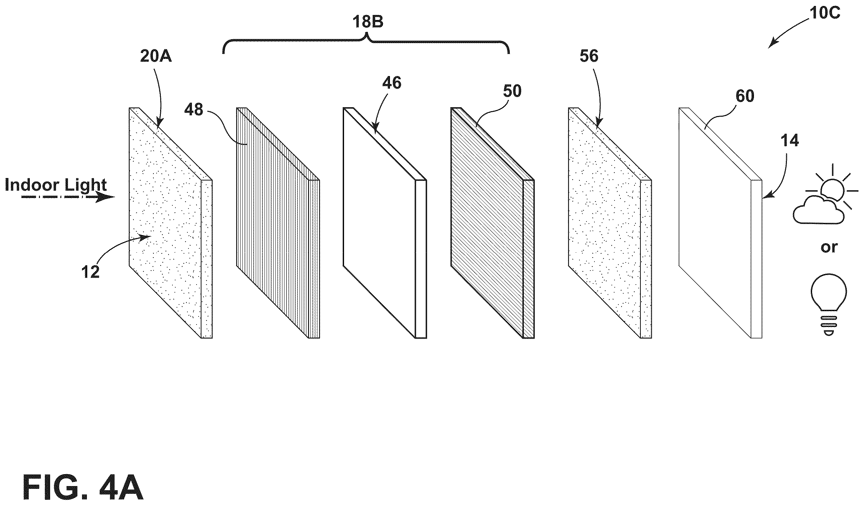

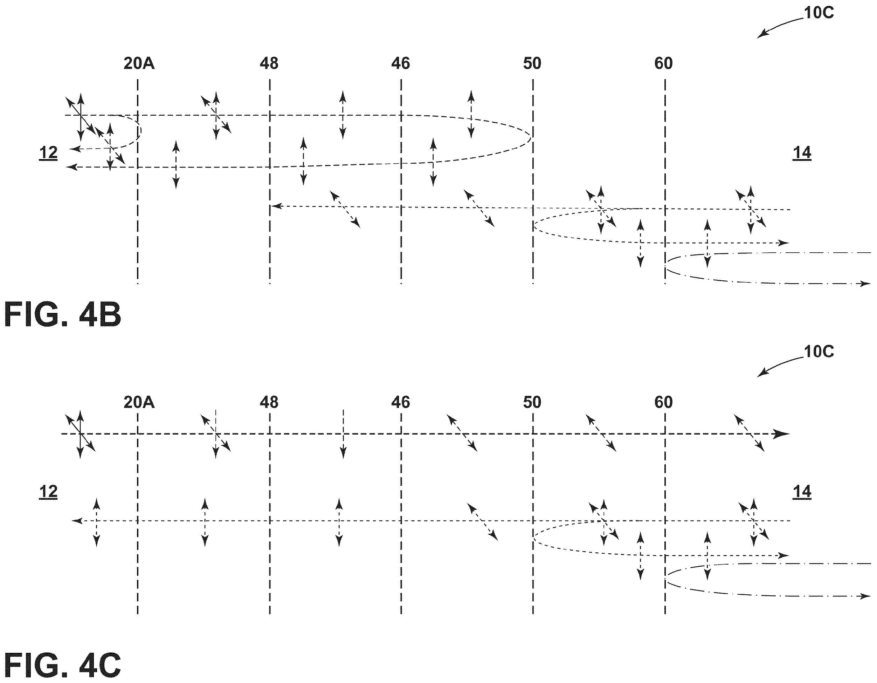

With reference now to FIG. 4A, an optical stack 10C of a third construction is depicted. Unless otherwise indicated, the optical stack 10C of the third construction may share all the same features, functions, materials, and be incorporated into the same structures as the other constructions described herein. While not limited thereto, the optical stack 10C of the second construction may be particularly beneficial via incorporation into structures where selectively reflecting light and scattering from both the front and rear major surfaces 12, 14 is beneficial. In this manner, the optical stack 10C may include the reflective element 18B (e.g., the selectively switchable reflective element) and an auxiliary scattering layer 56 switchable between the transmissive mode and the scattering mode located between the first reflective element 50 and the rear major surface 14. Like the first construction, the reflective element 18B, the scattering layer 20A, and the auxiliary scattering layer 56 may be spaced from one another by additional components, layers, and/or cavities/air gaps.

In a first state or substantially opaque state of the optical stack 10C depicted in FIG. 4B, the LCD medium 52 is in the first state or reflective state and both the scattering layer 20A and the auxiliary scattering layer 56 are in the scattered state. The opposing arrows indicate light transmitted into the optical stack 10C from the front major surface 12 and the rear major surface. In the substantially opaque state, a portion of the light is initially scattered and reflected back towards the intended viewer by the scattering layer 20A. Then, the first polarization of light is filtered through the first absorbative polarizer 48 (i.e., entering from the front major surface 12) passes through the LCD medium 52 and is reflected from the first reflective polarizer 50. Both the light entering the front major surface 12 and light reflected and exiting the front major surface 12 are scattered for a reduction in transparency and an increase in opaqueness (e.g., a decrease in transparency or transmission by 50% or more). Light entering the rear major surface 14, on the other hand, is partially scattered and reflected by the auxiliary scattering layer 56 before partially being reflected (e.g., the first polarization of light) from the first reflective polarizer 50 back outwardly. The second polarization of light passes through the reflective polarizer, is transmitted through the LCD medium 52 and absorbed by the absorption polarizer 48. In this manner, from a perspective on the rear major surface 14, the optical element 10C appears partially reflective and partially opaque.

In a second state or substantially translucent state of the optical stack 10C depicted in FIG. 4B, the LCD medium 52 is in the second state or transmissive state and both the scattering layer 20A and the auxiliary scattering layer 56 are in the scattered state. The opposing arrows indicate light transmitted into the optical stack 10C from the front major surface 12 and the rear major surface. In the substantially translucent state, light is initially scattered from the scattering layer 20A and the first polarization of light is filtered through the first absorbative polarizer 48 (i.e., entering from the front major surface 12) and is rotated by the LCD medium 52 and passes through the first reflective polarizer 50 and is further scattered from the auxiliary scattering layer 56. Light entering the rear major surface 14, on the other hand, is initially scattered from the auxiliary scattering layer 56 is partially reflected (e.g., the first polarization of light) from the first reflective polarizer 50 back outwardly. The second polarization of light passes through the reflective polarizer, is rotated by the LCD medium 52 and transmitted through the absorption polarizer 48 and scattered again from the scattering layer 20A. In this manner, from a perspective of the front major surface 12, the optical element 10C appears translucent via the scattering of light from the scattering layer 20A. From a perspective of the rear major surface 14, the optical element 10C appears partially reflective and scattered.

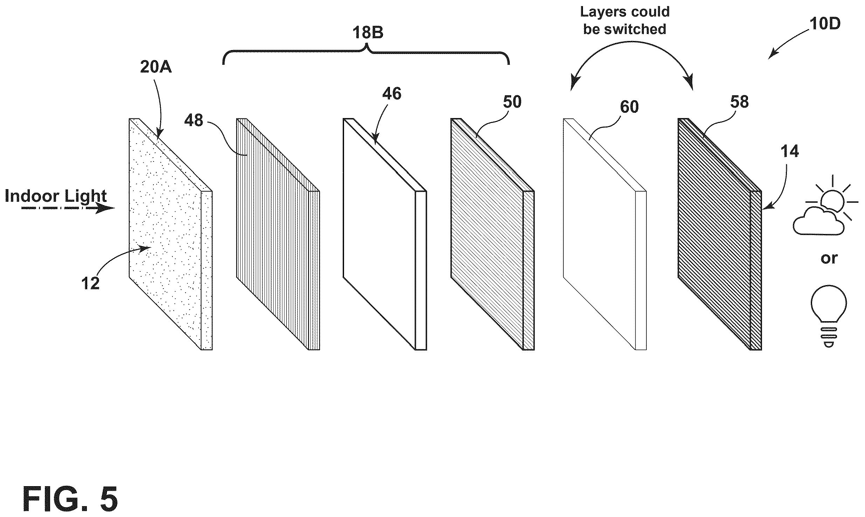

With reference now to FIG. 5, an optical stack 10D of a fourth construction is depicted. Unless otherwise indicated, the optical stack 10D of the fourth construction may share all the same features, functions, materials, and be incorporated into the same structures as the other constructions described herein. While not limited thereto, the optical stack 10D of the fourth construction may be particularly beneficial via incorporation into structures where selectively reflecting light is beneficial while selectively obtaining a level of opaqueness from the front major surface 12. In this manner, the optical stack 10D may include a reflective element 18B or a selectively switchable reflective element and an auxiliary absorptive polarizer 58 located between the reflective element 18B and the rear major surface 14. More particularly, a rear substrate 60 formed of glass or plastic may be proximate the rear major surface 14. The auxiliary absorptive polarizer 58 may be located between the reflective element 18B and the rear substrate 60 or between the rear substrate 60 and the rear major surface 14. In this manner, light entering the rear major surface 14 is initially filtered into the first polarization of light for dimmed transmission to the front major surface 12, likewise, light from the front major surface 12 that will be absorbed by the auxiliary absorptive polarizer 58 before reaching the rear major surface 14. In this manner, from the front major surface 12, the optical stack 10D can be reflective or opaque. Like the first construction, the reflective element 18B, the scattering layer 20A, and the auxiliary absorbing layer 58 may be spaced from one another by additional components, layers, and/or cavities/air gaps.

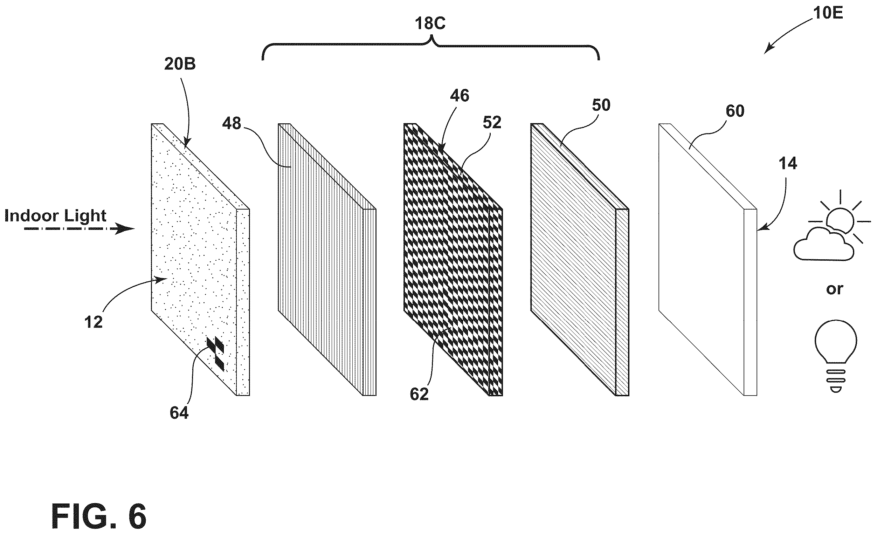

With reference now to FIG. 6, an optical stack 10E of a fifth construction is depicted. Unless otherwise indicated, the optical stack 10E of the fifth construction may share all the same features, functions, materials, and be incorporated into the same structures as the other constructions described herein. While not limited thereto, the optical stack 10E of the fifth construction may be particularly beneficial via incorporation into structures where selectively reflecting light in various portions of the optical stack 10E is beneficial. In this manner, the optical stack 10E may include a reflective element 18C or segmented/pixelated reflective element that includes a plurality of individually addressable reflective segments 62. In addition to or alternatively from the reflective segments 62, the optical stack 10E may further include a scattering layer 20B with a plurality of individually addressable scattering segments 64. In this manner, switching between transparent, translucent, reflective, or opaque states can be performed in an aesthetically pleasing manner and selectively if only light needs to be scattered or reflected in certain regions of the optical stack 10E. For example, a control system (not shown) may be configured to sequentially activate the reflective segments 62 and/or scattering segments 64 from a top of the optical stack 10E downwardly, similar to a blind, or in any other direction and pattern. Likewise, the individually addressable the reflective segments 62 and/or scattering segments 64 may be utilized to generate graphics (e.g., pixelations) on the optical stack 10E. Like the first construction, the reflective element 18C and the scattering layer 20B may be spaced from one another by additional components, layers, and/or cavities/air gaps.

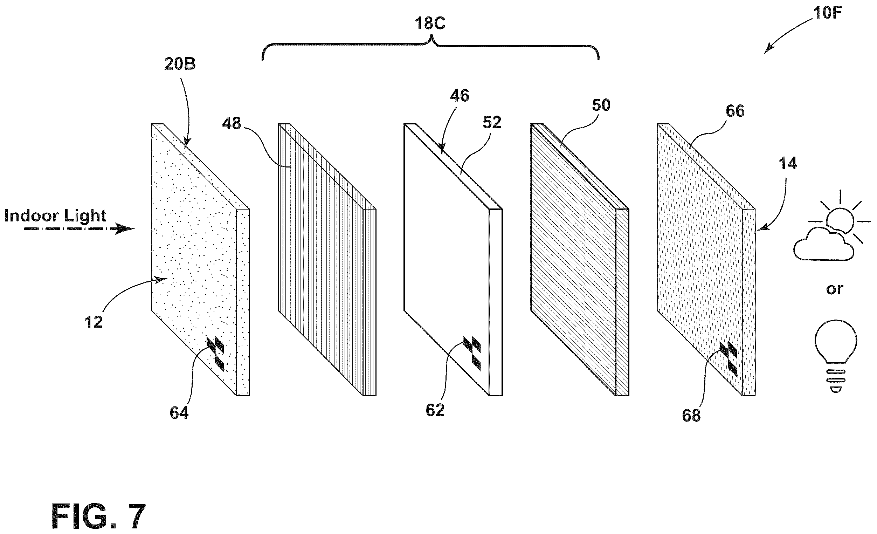

With reference now to FIG. 7, an optical stack 10F of a sixth construction is depicted. Unless otherwise indicated, the optical stack 10F of the sixth construction may share all the same features, functions, materials, and be incorporated into the same structures as the other constructions described herein. While not limited thereto, the optical stack 10F of the sixth construction may be particularly beneficial via incorporation into structures where selectively dimming light the optical stack 10F is beneficial. In this manner, the optical stack 10F may include an electro-optic device 66 switchable between a substantially transmissive state and a substantially opaque state. The electro-optic device 66 may be located between the reflective element 18B and the rear major surface 14. In some embodiments, the electro-optic device 66 may have a plurality of individually addressable EC segments 68, which may or may not be used in conjunction with the reflective segments 62 and/or the scattering segments 64 for further dimming control. In some embodiments, the electro-optic device 66 may define the rear major surface 14 and/or otherwise be closer to the rear major surface 14 than both the reflective layer 18C and the scattering layer 20B. While the electro-optic device 66 is described and depicted as including EC segments 68, it should be appreciated that the EC device 66 may be incorporated into any of the above constructions without EC segments 68, including, for example, in conjunction with the reflective layers 18A, 18B and the scattering layer 20A. Like the first construction, the reflective element 18B, the scattering layer 20A, and the electro-optic device 66 may be spaced from one another by additional components, layers, and/or cavities/air gaps.

With reference now to FIGS. 5-7, the various individually addressable segments 62, 64, 68 may be substantially matched in size and aligned. Generally speaking, the individually addressable segments 62, 64, 68 are electrically isolated from one another for individualized control over transmission, translucency, opaqueness, and reflectiveness from at least the front major surface 12. Likewise, it should be appreciated that the benefits of the individually addressable segments 62, 64, 68 may be realized in any of the constructions defined and depicted herein.

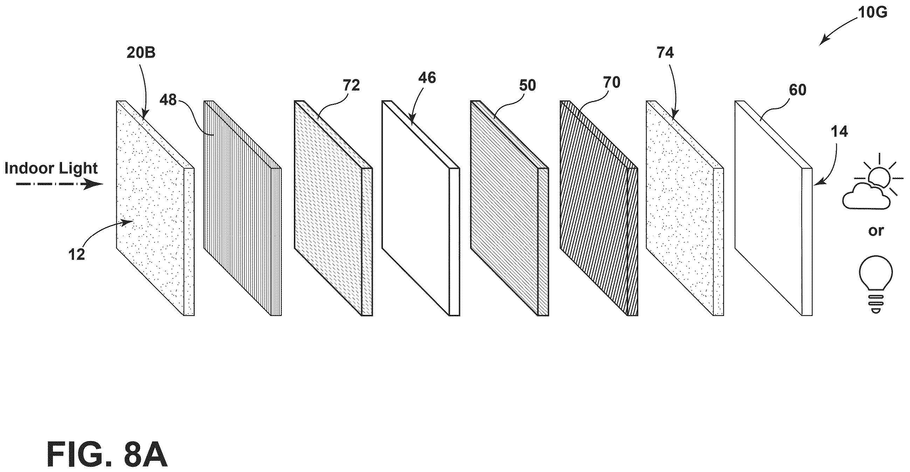

With reference now to FIG. 8A, an optical stack 10G of a seventh construction is depicted. Unless otherwise indicated, the optical stack 10G of the seventh construction may share all the same features, functions, materials, and be incorporated into the same structures as the other constructions described herein. While not limited thereto, the optical stack 10G of the seventh construction may be particularly beneficial via incorporation into structures where selectively reflecting light from light entering the front major surface 12 and the rear major surface 14 is beneficial. In this manner, the optical stack 10G may include a second absorptive polarizer 70 located between the first reflective polarizer 50 and the rear major surface 14 and a second reflective polarizer 72 located between the first absorption polarizer 48 and the reflective element 18B. In the seventh construction, both the first absorption polarizer 48 and the second absorptive polarizer 70 may be configured to absorb the first polarization of light and pass the second polarization of light. Further, the first reflective polarizer 50 and the second reflective polarizer 72 may be configured to reflect the first polarization of light. In some embodiments, a second scattering layer 74 may be located between the second absorption polarizer 70 and the rear major surface 14. Like the first construction, the various depicted layers may be spaced from one another by additional components, layers, and/or cavities/air gaps.

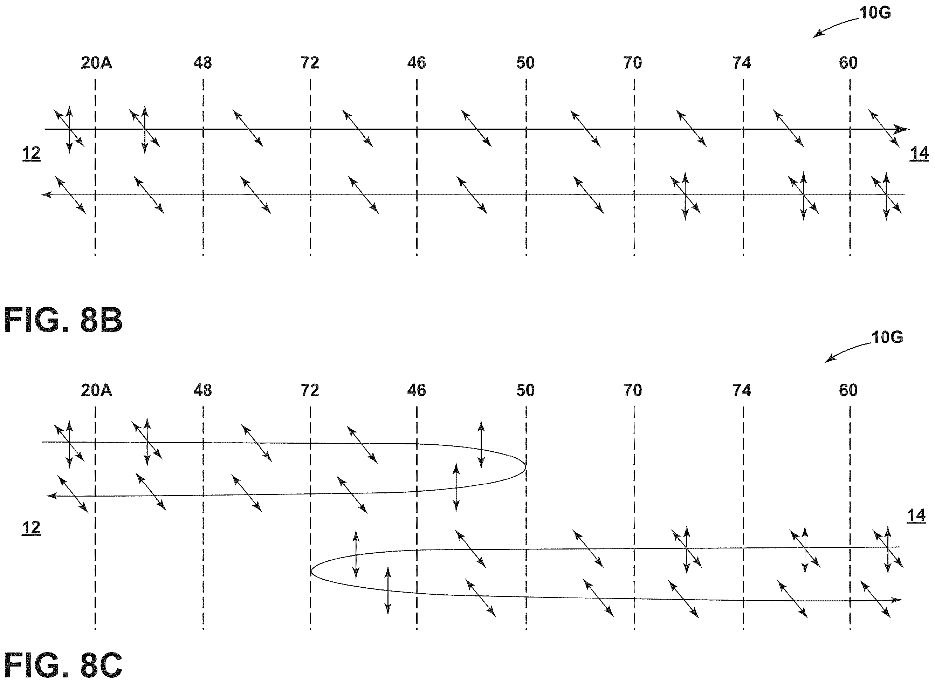

With reference now to FIGS. 8B-8E, various transmission modes are illustrated. In a first state or substantially transparent state depicted in FIG. 8B, the LCD medium 52 is in the second state or transmissive state and the scattering layer 20A and second scattering layer 74 are both in the transmissive mode or non-scattered state. The opposing arrows indicate light transmitted into the optical stack 10G from the front major surface 12 and the rear major surface. In the substantially transparent state, the light entering from both the front major surface 12 and the rear major surface 14 remains substantially unchanged except when passing through the first absorptive polarizer 48 the second absorptive polarizer 70. More particularly, light entering the front major surface 12 is filtered to the second polarization by the first absorbative polarizer 48, which passes through the first reflective polarizer 50, the second reflective polarizer, and the second absorptive polarizer 70. Light entering the rear major surface 14 is filtered by the second absorptive polarizer 70, which passes through the first reflective polarizer 50, the second reflective polarizer, and the first absorptive polarizer 48. In the substantially transparent state, the degree of transparentness can be modified by a slight twisting of the crystals in the LCD medium 52. More particularly, depending on if the powered or non-powered state corresponds to twisting, a median power supplied to the LCD medium 52 that places the crystals in a partially twisted state can be utilized for selectively dimming light entering through the front major surface 12 or the rear major surface 14. In this manner, in addition to selectively reflecting and scattering, the optical stack 10G may further provide dimming functionality by selectively reducing the transmission of light.

In a second state or substantially reflective state depicted in FIG. 8C, the LCD medium 52 is in the first state or reflective state and the scattering layer 20A and second scattering layer 74 are in the transmissive or non-scattered state. The opposing arrows indicate light transmitted into the optical stack 10G from the front major surface 12 and the rear major surface. In the substantially transparent state, the second polarization of light from the first absorbative polarizer 48 (i.e., entering from the front major surface 12) passes through and is rotated by the LCD medium 52 and is reflected from the first reflective polarizer 50. Light entering the rear major surface 14, on the other hand, is filtered through the second absorbative polarizer 70 (i.e., as the second polarization of light) passes through and is rotated by the LCD medium 52 and is reflected from the second reflective polarizer 72. In this manner, from a perspective on the front and rear major surfaces 12, 14, the optical element 10G appears reflective.

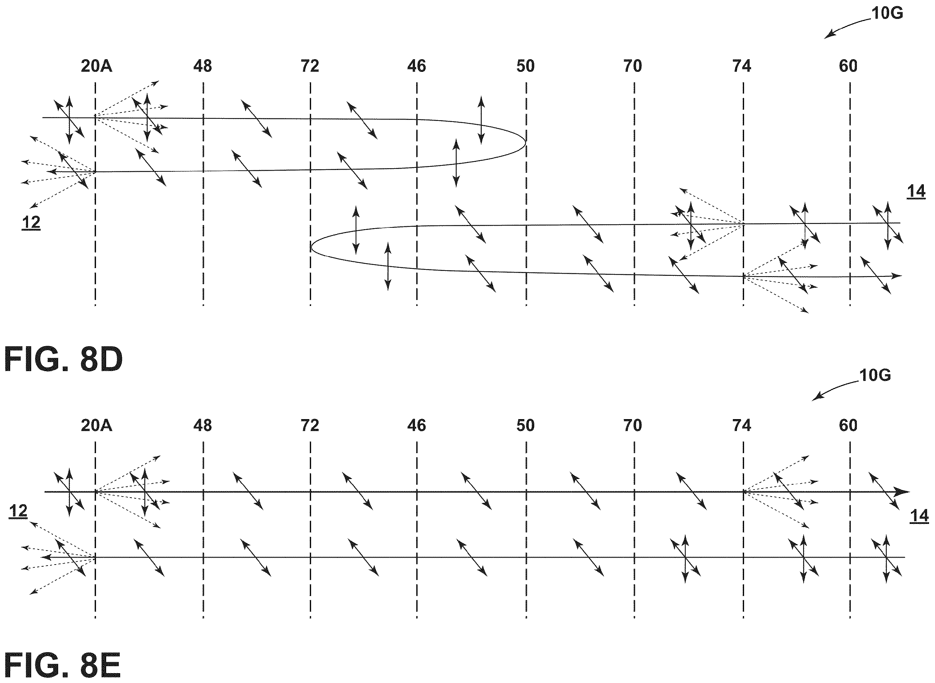

In a third state or substantially opaque state depicted in FIG. 8D, the LCD medium 52 is in the first state or reflective state and the scattering layer 20A and second scattering layer 74 are in the scattered state. The opposing arrows indicate light transmitted into the optical stack 10G from the front major surface 12 and the rear major surface. In the substantially opaque state, a portion of the light is initially scattered and reflected back towards the intended viewer by the scattering layer 20A. Then, the first polarization of light is filtered through the first absorbative polarizer 48 (i.e., entering from the front major surface 12) passes through and is rotated by the LCD medium 52 and is reflected from the first reflective polarizer 50. Both the light entering the front major surface 12 and light reflected and exiting the front major surface 12 is scattered for a reduction in transparency and an increase in opaqueness (e.g., a decrease in transparency or transmission by 50% or more). Light entering the rear major surface 14, on the other hand, is partially reflected from the second scattering layer 74 back outwardly and further filtered by the first reflective polarizer 50 to the second polarization of light that passes through the second absorptive polarizer 70. The second polarization of light passes through and is rotated by the LCD medium 52 and reflected by the second reflective polarizer 72. In this manner, from a perspective on the front and rear major surfaces 12, 14, the optical element 10G appears partially opaque and scattered.

In a fourth state or substantially translucent state depicted in FIG. 8E, the LCD medium 52 is in the second state or transmissive state and the scattering layer 20A and second scattering layer 74 are in the transmissive or non-scattered state. The opposing arrows indicate light transmitted into the optical stack 10G from the front major surface 12 and the rear major surface. In the substantially translucent state, the second polarization of light from the first absorbative polarizer 48 (i.e., entering from the front major surface 12) passes through the LCD medium 52 and passes through the first reflective polarizer 50, the second absorptive polarizer 70, and the second reflective polarizer 72. Light entering the rear major surface 14, on the other hand, is partially filtered (e.g., to the second polarization of light) from the second absorptive polarizer 70 and passes through the LCD medium 52, the first reflective polarizer 50, the first absorptive polarizer 48, and the second reflective polarizer 72. In this manner, from a perspective of the front major surface 12 and the rear major surface 14, the optical element 10G appears translucent via the scattering of the second polarization of light from the scattering layers 20A, 74.

The disclosure herein is further summarized in the following paragraphs and is further characterized by combinations of any and all of the various aspects described therein.

According to one aspect of the present disclosure, an optical stack includes a front major surface and a rear major surface defining a peripheral edge. A reflective element is located between the front and rear major surfaces and configured to modify the transmission of light. A scattering layer is located between the front major surface and the reflective element. The scattering layer is switchable between a transmissive mode and a scattering mode. In the transmissive mode, light reflected from or transmitted through the reflective element is substantially unchanged. In the scattering mode, light reflected from or transmitted through the reflective element is substantially scattered.

According to another aspect, the scattering layer includes a front scattering surface, a rear scattering surface, and a cholesteric liquid crystal layer sandwiched between the front scattering surface and the rear scattering surface.

According to yet another aspect, the scattering layer includes a polymer-dispersed liquid crystal medium.

According to still another aspect, the reflective element includes a liquid crystal device ("LCD") switchable between a first state and a second state.

According to another aspect, the reflective element further includes an absorptive polarizer located between the LCD and the scattering layer and a reflective polarizer located between the LCD and the rear major surface.

According to yet another aspect, the LCD is pixelated and configured to generate graphics in the first state.

According to still another aspect, in the first state of the LCD, a first linear polarization of light is rotated, in the second state, the first linear polarization of light passes through the LCD without rotation, and, in an intermediate state, the polarization of light is partially rotated.

According to still yet another aspect, an auxiliary scattering layer is switchable between the transmissive mode and the scattering mode located between the reflective element and the rear major surface.

According to another aspect, a rear substrate defines the rear major surface.

According to yet another aspect, an auxiliary absorptive polarizer is located between the reflective element and the rear major surface.

According to still another aspect, a rear substrate defining the rear major surface.

According to another aspect, a rear substrate is located between the auxiliary absorptive polarizer and the reflective polarizer, the auxiliary absorptive polarizer coupled to a surface of the rear substrate facing the rear major surface.

According to yet another aspect, the optical stack includes an electro-optic device that is switchable between a substantially transmissive state and a substantially opaque state, and the electro-optic device is located between the reflective element and the rear major surface.

According to still another aspect, the reflective layer includes a cholesteric liquid crystal layer.

According to another aspect, the reflective layer includes an electroplated surface.

According to yet another aspect, a visor assembly for a vehicle includes the optical stack according to any and all of the various aspects.

According to still another aspect, a window includes the optical stack according to any and all of the various aspects.

According to another aspect, a passive mirror includes the optical stack according to any and all of the various aspects.

According to another aspect of the present disclosure, an optical stack that is selectively bi-directionally reflective. The optical stack includes a front major surface and a rear major surface defining a peripheral edge. A switchable reflective element is located between the front and rear major surfaces and configured to selectively reflect the transmission of light from the front major surface in a first state and selectively transmit the transmission of light from the front major surface in a second state. A scattering layer is located between the front major surface and the reflective element. The scattering layer is switchable between a transmissive mode wherein light reflected from or transmitted through the reflective element is substantially unchanged, and a scattering mode wherein light reflected from or transmitted through the reflective element is substantially scattered.

According to another aspect, the switchable reflective element further includes a liquid crystal device ("LCD") switchable between the first state and the second state, a first absorptive polarizer located between the LCD and the scattering layer, and a second absorptive polarizer located between the LCD and the rear major surface.

According to yet another aspect, the switchable reflective element further includes a first reflective polarizer located between the LCD and the first absorptive polarizer and a second reflective polarizer located between the LCD and the second absorptive polarizer.

According to still another aspect, the optical stack includes an auxiliary scattering layer switchable between the transmissive mode and the scattering mode and located between the switchable reflective element and the rear major surface.

According to another aspect, the optical stack includes a rear substrate defining the rear major surface.

According to another aspect, the scattering layer includes a front scattering surface, a rear scattering surface, and a cholesteric liquid crystal layer sandwiched between the front scattering surface and the rear scattering surface.

According to yet another aspect, the scattering layer includes a polymer-dispersed liquid crystal medium.

According to still another aspect, a sunroof includes the optical stack according to any and all of the various aspects.

According to another aspect, a visor assembly for a vehicle includes the optical stack according to any and all of the various aspects.

According to yet another aspect, a window for an aircraft includes the optical stack according to any and all of the various aspects.

According to still another aspect of the present disclosure, an optical stack includes a front major surface and a rear major surface defining a peripheral edge. A reflective element is located between the front and rear major surfaces and configured to modify the transmission of light. A segmented scattering layer is located between the front major surface and the reflective element and includes a plurality of scattering segments. Each scattering segment in the scattering layer is individually switchable between a transmissive mode wherein light reflected from or transmitted through the reflective element is substantially unchanged, and a scattering mode wherein light reflected from or transmitted through the reflective element is substantially scattered.

According to another aspect, the optical stack includes a segmented electro-optic device including a plurality of EC segments, each EC segment individually switchable between a substantially transmissive state and a substantially opaque state.

According to yet another aspect, the plurality of scattering segments is substantially matched in size and aligned with the plurality of EC segments.

According to still yet another aspect, the plurality of scattering segments are electrically isolated from one another and each include a front scattering surface, a rear scattering surface, and a cholesteric liquid crystal layer sandwiched between the front scattering surface and the rear scattering surface.

According to another aspect, the plurality of scattering segments are electrically isolated from one another and each includes a polymer-dispersed liquid crystal medium.

According to yet another aspect, the reflective element is configured to selectively reflect the transmission of light from the front major surface in a first state and selectively transmit the transmission of light from the front major surface in a second state.

According to still yet another aspect, the reflective element includes a plurality of reflective segments that are individually selectively switchable between the first state and the second state.

According to another aspect, the plurality of scattering segments are substantially matched in size and aligned with the plurality of reflective segments.

According to yet another aspect, a window for an aircraft includes the optical stack according to any and all of the various aspects.

It will be understood by one having ordinary skill in the art that construction of the described disclosure and other components is not limited to any specific material. Other exemplary embodiments of the disclosure disclosed herein may be formed from a wide variety of materials, unless described otherwise herein.

For purposes of this disclosure, the term "coupled" (in all of its forms, couple, coupling, coupled, etc.) generally means the joining of two components (electrical or mechanical) directly or indirectly to one another. Such joining may be stationary in nature or movable in nature. Such joining may be achieved with the two components (electrical or mechanical) and any additional intermediate members being integrally formed as a single unitary body with one another or with the two components. Such joining may be permanent in nature or may be removable or releasable in nature unless otherwise stated.

As used herein, the term "about" means that amounts, sizes, formulations, parameters, and other quantities and characteristics are not and need not be exact, but may be approximate and/or larger or smaller, as desired, reflecting tolerances, conversion factors, rounding off, measurement error and the like, and other factors known to those of skill in the art. When the term "about" is used in describing a value or an end-point of a range, the disclosure should be understood to include the specific value or end-point referred to. Whether or not a numerical value or end-point of a range in the specification recites "about," the numerical value or end-point of a range is intended to include two embodiments: one modified by "about," and one not modified by "about." It will be further understood that the end-points of each of the ranges are significant both in relation to the other end-point, and independently of the other end-point.

The terms "substantial," "substantially," and variations thereof as used herein are intended to note that a described feature is equal or approximately equal to a value or description. For example, a "substantially planar" surface is intended to denote a surface that is planar or approximately planar. Moreover, "substantially" is intended to denote that two values are equal or approximately equal. In some embodiments, "substantially" may denote values within about 10% of each other, such as within about 5% of each other, or within about 2% of each other.

It is also important to note that the construction and arrangement of the elements of the disclosure, as shown in the exemplary embodiments, is illustrative only. Although only a few embodiments of the present innovations have been described in detail in this disclosure, those skilled in the art who review this disclosure will readily appreciate that many modifications are possible (e.g., variations in sizes, dimensions, structures, shapes and proportions of the various elements, values of parameters, mounting arrangements, use of materials, colors, orientations, etc.) without materially departing from the novel teachings and advantages of the subject matter recited. For example, elements shown as integrally formed may be constructed of multiple parts, or elements shown as multiple parts may be integrally formed, the operation of the interfaces may be reversed or otherwise varied, the length or width of the structures and/or members or connectors or other elements of the system may be varied, and the nature or number of adjustment positions provided between the elements may be varied. It should be noted that the elements and/or assemblies of the system may be constructed from any of a wide variety of materials that provide sufficient strength or durability, in any of a wide variety of colors, textures, and combinations. Accordingly, all such modifications are intended to be included within the scope of the present innovations. Other substitutions, modifications, changes, and omissions may be made in the design, operating conditions, and arrangement of the desired and other exemplary embodiments without departing from the spirit of the present innovations.

It will be understood that any described processes or steps within described processes may be combined with other disclosed processes or steps to form structures within the scope of the present disclosure. The exemplary structures and processes disclosed herein are for illustrative purposes and are not to be construed as limiting.

It is also to be understood that variations and modifications can be made on the aforementioned structures and methods without departing from the concepts of the present disclosure, and further it is to be understood that such concepts are intended to be covered by the following claims unless these claims by their language expressly state otherwise.

## Claims

1. An optical stack (10A-10F) comprising:
a front major surface (12) and a rear major surface (14) defining a peripheral edge (16);
a reflective element (18A-18C) located between the front and rear major surfaces (12, 14) and configured to modify the transmission of light; and
a scattering layer (20A, 20B) located between the front major surface (12) and the reflective element (18A-18C), the scattering layer (20A, 20B) switchable between a transmissive mode wherein light reflected from or transmitted through the reflective element (18A-18C) is substantially unchanged, and a scattering mode wherein light reflected from or transmitted through the reflective element (18A-18C) is substantially scattered.

2. The optical stack (10A-10F) of claim 1, wherein the scattering layer (20A, 20B) includes a front scattering surface (22), a rear scattering surface (24), and a cholesteric liquid crystal layer sandwiched between the front scattering surface (22) and the rear scattering surface (24).

3. The optical stack (10A-10F) of claim 1 or 2, wherein the scattering layer (20A, 20B) includes a polymer-dispersed liquid crystal medium.

4. The optical stack (10A-10F) of any one of claims 1 to 3, wherein the reflective element (18A-18C) includes a liquid crystal device (46) ("LCD") switchable between a first state and a second state.

5. The optical stack (10B) of any one of claims 1 to 4, wherein the reflective element (18B) further includes an absorptive polarizer (48) located between the LCD (46) and the scattering layer (20A) and a reflective polarizer (50) located between the LCD (46) and the rear major surface (14).

6. The optical stack (10B) of claim 4 or 5, wherein the LCD (46) is pixelated and configured to generate graphics in the first state.

7. The optical stack (10A-10F) of any one of claims 4 to 6, wherein, in the first state of the LCD (46), a first linear polarization of light is rotated, in the second state, the first linear polarization of light passes through the LCD (46) without rotation, and, in an intermediate state, the polarization of light is partially rotated.

8. The optical stack (10C) of any one of claims 1 to 7, further including an auxiliary scattering layer (56) switchable between the transmissive mode and the scattering mode located between the reflective element (18A-18C) and the rear major surface (14).

9. The optical stack (10C) of any one of claims 1 to 8, further including a rear substrate (60) defining the rear major surface (14).

10. The optical stack (10D) of any one of claims 1 to 9, further including an auxiliary absorptive polarizer (58) located between the reflective element (18B) and the rear major surface (14).

11. The optical stack (10D) of claim 10, further including a rear substrate (60) defining the rear major surface (14).

12. The optical stack (10D) of claim 10, further including a rear substrate (60) located between the auxiliary absorptive polarizer (58) and the reflective polarizer (50), the auxiliary absorptive polarizer (58) coupled to a surface of the rear substrate (60) facing the rear major surface (14).

13. The optical stack (10F) of any one of the preceding claims, further including an electro-optic device (66) switchable between a substantially transmissive state and a substantially opaque state, the electro-optic device (66) located between the reflective element (18C) and the rear major surface (14).

14. The optical stack (10B-10D) of any one of the preceding claims, wherein the reflective element (18A-18C) includes an electroplated surface.

15. The optical stack (10D) of any one of the preceding claims, wherein the scattering layer (20A) is located proximate the front major surface (12).
